# EUROPEAN PATENT APPLICATION

(11) **EP 3 273 752 A1**
(43) Date of publication of application: **24.01.2018**
(21) Application number: 16180666.6
(22) Date of filing: 21.07.2016
(51) Int. Cl.: H05B 37/02

(54) **MICROCLIMATE LIGHT LEVEL CONTROLER FOR OCCUPIED SPACES**

(71) Applicant: Honeywell International Inc., Morris Plains, NJ 07950 (US)
(72) Inventor: MARIK, Karel, Morris Plains, NJ 07950 (US); SHINDLER, Zdenek, Morris Plains, NJ 07950 (US); HOLUB, Ondrej, Morris Plains, NJ 07950 (US)
(74) Representative: Houghton, Mark Phillip

(57) **Abstract**

A microclimate light level controller for an occupied space is described herein. One example embodiment includes a controller that controls a total intensity of illumination in an occupied space, wherein the total intensity of illumination includes a calculation of intensity of illumination from one or more individual human-made light sources and natural light sources via sun-blinds and wherein the controller adapts one or more control settings based on one or more requirements specified by an occupant of the occupied space or received from one or more sensors within the occupied space and wherein the controller includes a processor that executes instructions to analyze lighting data, including light sources being used, lighting intensity within the occupied space, and sun blind position, to determine an intensity of illumination in the occupied space.

## Description

### Technical Field

The present disclosure relates to a microclimate light level controller for occupied spaces.

### Background

Office buildings and other working or dwelling building environments can have spaces where the lighting (both human-made and natural) affects several people, for example, in adjacent spaces near windows allowing natural light from outside of the building into the space or human-made light sources that have a wide beam or that are on the same light control mechanism.

One issue with such environments is that each human-made light source and each sun blind (used to control the amount of outside light entering a space) typically influences several workspaces in quite different and sometimes complex ways.

Further, oftentimes, human-made light sources and sun blinds are used inefficiently, either in production of light when some natural light is available or too much light when less light is desirable. Such environments can, for example, cause "light discomfort", in which workers are uncomfortable with their lighting arrangement which may reduce their working efficiency in a workplace.

In many instances, one configuration of human-made lighting and/or positioning of the blinds is used or a schedule of configurations and positions are used, but never deviated from. These configurations and/or positions likely may not have been selected without any input from the occupants of the space being illuminated by those lights/windows in that configuration/schedule. Additionally, human-made light sources generate more heat than natural lighting and as such, is some instances, the lighting may cause a space to be too hot and is either uncomfortable to the occupants or causes the cooling system to run thereby increasing building operating costs.

### Brief Description of the Drawings

Figure 1 illustrates an example of a system for providing microclimate light level control for occupied spaces in accordance with one or more embodiments of the present disclosure.
Figure 2A illustrates examples of different lighting conditions and changes that can be made based on these conditions in accordance with one or more embodiments of the present disclosure.
Figure 2B illustrates an example of warm climate conditions and changes that can be made based on these conditions in accordance with one or more embodiments of the present disclosure.
Figure 2C illustrates an example of cold climate conditions and changes that can be made based on these conditions in accordance with one or more embodiments of the present disclosure.
Figure 3 illustrates an example of a workspace environment wherein one or more embodiments of the present disclosure may be implemented.
Figure 4 illustrates examples of different lighting requirements and conditions and the use of one or more embodiments of the present disclosure to change the lighting configuration of regular light sources or light sources with a broken element.
Figure 5 illustrates examples of different lighting conditions and the use of one or more embodiments of the present disclosure to change the lighting configuration with different light sources and these light sources with a broken element.
Figure 6 illustrates an example of a computing device for providing controller functionality in accordance with one or more embodiments of the present disclosure.

### Detailed Description

Devices, systems, and methods of microclimate light level control for an occupied space are described herein. For example, one or more embodiments include a controller that controls intensity of illumination in each specified place of an occupied space.

In such an embodiment, the total intensity of illumination can include, for example, a calculation of intensity of illumination from one or more individual human-made light sources and natural light sources via sun blinds and the controller adapts one or more control settings based on one or more requirements specified by an occupant of the occupied space or received from one or more sensors within the occupied space. The controller can also include a processor that executes instructions to analyze lighting data, including light sources being used, lighting intensity within the occupied space, and sun blind position, to determine an intensity of illumination in the occupied space.

In such a manner, the light intensity of illumination can be determined and the light from the light sources that falls on the occupied space can be adjusted. This can be done, for example, based on the preferences of an occupant of the occupied space and, in some embodiments, the cheapest cost (based on electrical cost, light source cost, replacement costs such as maintenance time to replace the source, or other cost related factors) to the building operator, can also be considered.

It should be noted that although natural solar light costs nothing to produce, it can also produce heat which can be a benefit or detriment from a cost standpoint. For example, if the temperature of the building is below a desired threshold temperature, natural solar light may be advantageous as it can be used to heat the space in a more cost effective manner which can be used as an alternative to human-made heating solutions.

However, if the occupied space's temperature is above a desired threshold temperature, then using natural solar light may increase the temperature further and, as such, a human-made lighting source may be preferred since a human-made cooling solution may need to be used to remove the heat created by the natural light and use of natural solar light may not be cost effective when including the cooling costs.

In cooler climates, with respect to heat gains in winter, any additional heat source may be desirable. In such an environment, then the question becomes, what is better: the heat coming from human-made light sources or from outside through the windows. In the summer it may be better to shade the windows somewhat and switch on human-made light sources. However, if analyzed as discussed herein, it may not always be better. As discussed below, this 'heat energy' criterion is only one factor that may be used in some embodiments of the present disclosure to determine a lighting plan. Such analysis will be discussed in more detail below with respect to the figures provided herein.

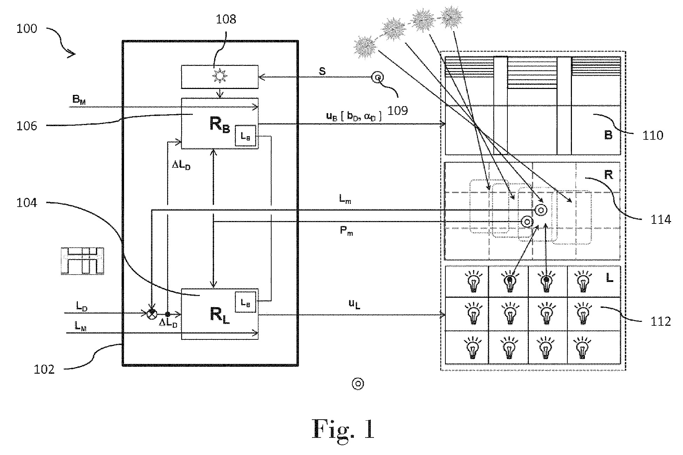

Figure 1 illustrates an example of a system for providing microclimate light level control for occupied spaces in accordance with one or more embodiments of the present disclosure. In the embodiment of Figure 1, the microclimate light level control system 100 includes a controller 102 that controls the amount of human-made light and/or natural light entering an occupied space within a building.

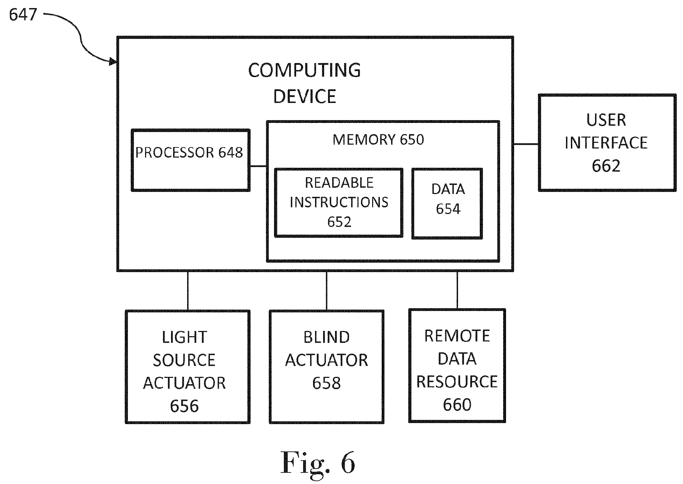

These functions can be controlled by one controller, such as the computing device described in more detail in Figure 6, or by separate controllers (e.g., separate computing devices that can be proximate to the occupied space or in a remote location). For example, one controller could be used to control the blinds and one controller could be used to control the lighting.

Other functions that could be controlled from a controller can, for example, be the intensity of the light provided from the human-made light sources, the selection of which light sources should be generating light (turned on) or not generating light (turned off). A controller can also be used to determine the lighting arrangement (the use of natural and/or human-made light sources and in what amounts) based on a number of factors as discussed in more detail below.

In the embodiment of Figure 1, several types of data are provided to the controller 102 to assist the controller in making a determination as to the amount of natural and/or human-made lighting to be used at any given time. For example, types of data that can be provided include, but are not limited to: sun intensity (S), position of sun blinds, status of light sources (e.g., on or off, percentage of intensity, etc.), and desired illuminations of different places within the space (L_{D}), which, as used herein, can be the default light setting for light sources at a particular point in time. Also shown are the manual override of the sun blinds position (B_{M}), and the manual override of the artificial lighting (L_{M}) which can be used to adjust the lighting after the blinds and artificial light source have been set.

Generally, with respect to Figure 1, items designated with an L represent human-made light source related items, items with a B represent blind related items, items with an S are sun related items, items with a P are place related items (occupied spaces to be illuminated), and items with an R represent control related items.

As used herein an occupied space can be any space in a building where an individualized lighting solution for a particular area therein would be suitable. For example, an occupied space can be a desk space for a worker, a workstation for accomplishing specialized tasks (e.g., a space where an assembly worker is assembling components of a device), all or a portion of a storage area or other large building, or all or a portion of a workroom (e.g., area around a photocopying device), among other suitable types of spaces in a building.

As used herein, an occupied space does not need to be occupied by an occupant, but rather it is a space in which an occupant may be located. For example, a lighting arrangement for a cubicle in a workspace may be determined with the expectation that a person will be occupying the space even if the person is not physically present at the cubicle. Illumination may be needed in a space because of another reason, for example, security, illumination of objects of an exhibition, growing plants, even outdoor spaces at night may be illuminated with different intensity at different places with multiplicity of lights and may benefit from an embodiment of the present disclosure.

With regard to the data types discussed above, sun intensity can, for example, be provided from a data table having historical data regarding the weather tendencies for the location of the occupied space, data can be received via one or more sensors (e.g., sensor 109) located inside and/or outside the building. Data can, alternatively or additionally, be from an external source, such as a weather website and/or weather data service that can be accessed by the controller (via executable instructions to retrieve such data) or the data can be received by the controller (e.g., the weather data service pushes the data to the controller or to a memory store accessible by the controller). This information can be used to determine how much natural light (e.g., sunlight) may be available to be used in the occupied space.

These amounts can vary during certain portions of each day (e.g., sunrise, sunset, midday, night time, change in sky cover from sunny to cloudy, etc.) based on the time of day and the position of the occupied space to the sun (e.g., west facing windows allow more natural light in in the afternoon than in the morning). This information can also be used to determine the effectiveness of use of natural light as an alternative to or in addition to human-made light.

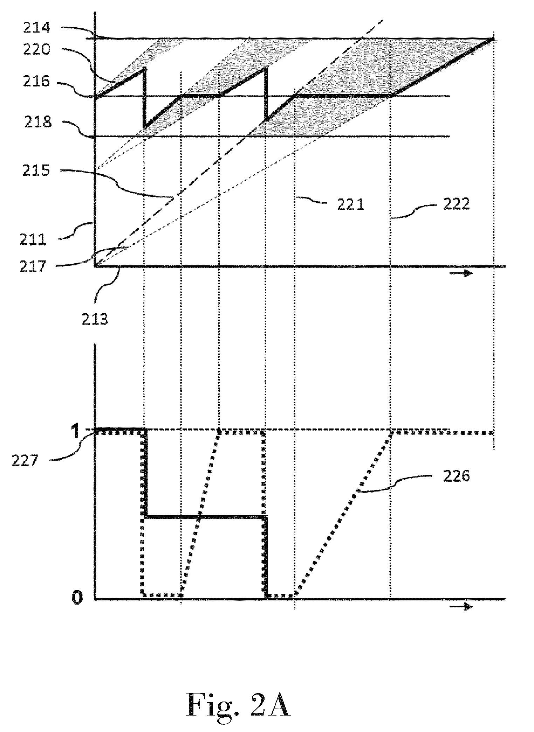

For example, the amount of natural light available and/or the heat generated by that particular amount of light can be estimated. The outside temperature can also be sensed or estimated and this information can be used to determine the human-made and natural lighting arrangement for an occupied space. Such analysis will be discussed in more detail with respect to Figures 2A-2C.

The sun intensity can be provided as, for example, a percentage of possible light intensity or in units of luminosity, or other suitable quantity. Human-made light intensity can also be similarly quantified and these quantities can then be used to determine the use of either or both light sources under various conditions.

Figure 1 also illustrates a set of rules 104 (RL) (in the form of executable instructions that can be executed by a computing device) for controlling the human-made light sources. If it is determined that an adjustment to one or more human-made light sources is needed, then the controller 102 can send control signals (L control) to one or more of the human-made light sources 112 (or a control device proximate thereto, if, for example, a remotely located controller is used) to adjust the one or more light sources to add or reduce the amount of light provided to a particular occupied space 114.

The embodiment shown in Figure 1 also illustrates a set of rules 106 (RB) (in the form of executable instructions that can be executed by a computing device) for controlling the blinds, thereby controlling the amount of natural light utilized. If it is determined that an adjustment to one or more blinds is needed, then the controller 102 can send one or more control signals (S control) to one or more of the blinds 110 (or a control device proximate thereto, if, for example, a remotely located controller is used) or the controller can actuate the blinds directly, to adjust the one or more blinds to add or reduce the amount of natural light provided to a particular occupied space 114.

Figure 2A illustrates examples of different lighting conditions and changes that can be made based on these conditions in accordance with one or more embodiments of the present disclosure. It should be noted that the charts in Figures 2A-2C show a situational example with respect to one place in a room. Such charts can be created for other specific different places within the room which will take into account different criteria, such as different occupant preferences.

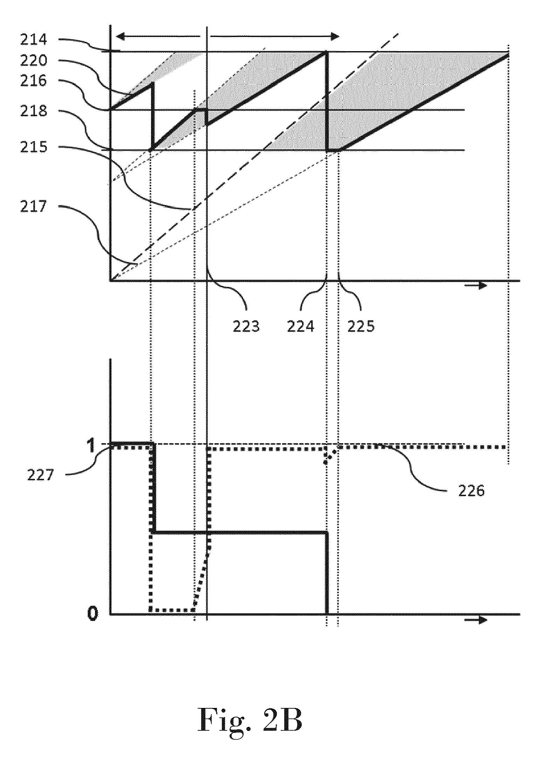

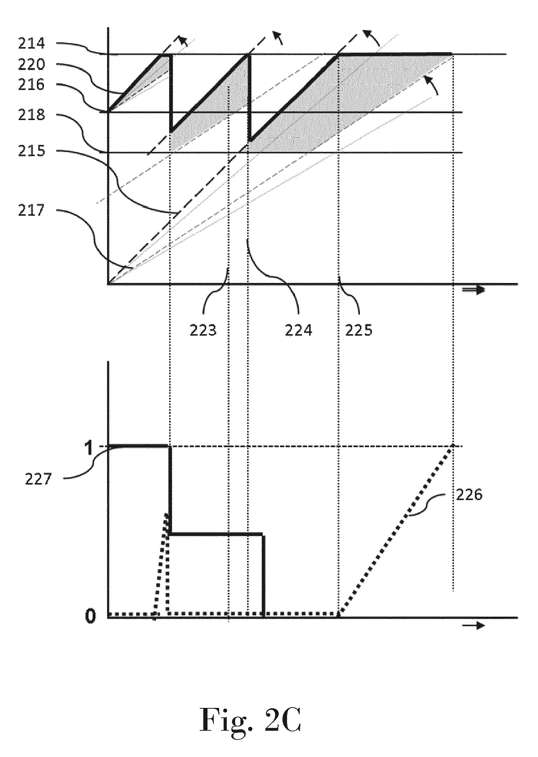

Figure 2A illustrates a situation, when the controller keeps the light intensity on a place as close to the optimum 216 as possible. In Figures 2B and 2C the charts show control strategies with modified objectives, for example, minimizing and maximizing heat gains in summer and winter.

In the upper chart of the figure, the light intensity at a particular occupied space is provided along the y-axis 211 of the chart wherein the origin represents no light in the occupied space and the end of the y-axis represents full light intensity. The external light intensity is provided along the x-axis 213 ranging from no sun at the origin to full sun at the end of the x-axis.

The maximum 214, minimum 218 light intensity thresholds and optimal 216 light intensity desired by the occupant of a particular space (determined in some way, e.g., based on data, for example, from similar occupants in the workspace or other workspaces in the building or other buildings) are also shown on the chart. These values can be used to determine how to change the amount of human-made and/or natural light entering the occupied space. Line 220 represents a light intensity that may be used in such an occupied space. The light intensity is the resulting lighting from various outdoor light intensity sources (x-axis) and various control activity of lights and sun blinds (depicted on lower chart). As can be seen from this chart, when using an embodiment of the present disclosure, the light intensity fluctuates between the minimum and maximum intensity levels 214 and 218.

The chart on the bottom of Figure 2A shows the amount of human-made lighting 227 used, with 1 representing that the lights are at full intensity and 0 representing they are not emitting light. The chart also shows positioning of the blinds 226 with 1 representing full shading (blinds fully closed and allowing minimum natural light into the space) and zero representing no shading (blinds fully open and allowing maximum natural light into the space).

The upper and lower charts function together to show how the changes in the amount of light from each source on the lower chart can be used to adjust the lighting in the space shown on the upper chart.

As can be seen by the two charts, the light intensity 220 in the space starts at an initial level on the left of the upper chart, where human-made lighting is at its maximum intensity (represented in the lower chart as a quantity of 1). As the natural light intensity 215 increases, the light in the space 220 also increases. The light intensity in the space begins to approach the maximum light intensity threshold 214 and, as such, the control system determines whether to adjust the human-made light or the natural light.

This example shows perhaps an ideal, situation. In reality, the maximum or minimum levels might be exceeded, if the human-made lights and blinds, in some situations, cannot satisfy required intensities. Then, acceptable compromises may have to be accepted, and maxima and minima may have to be suitably modified.

As an example of difficulties with satisfying hard requirements, the situation may be from an arrangement having a single human-made light source in a room. If the light source is ON, the illumination level may be higher than the maximum (214) desired, if the light is OFF, the lighting is below the acceptable low illumination limit (218).

An analysis, such as that above, can be accomplished, for example, through use of a processor using executable instructions to analyze information from sensors placed in the workspace and/or outside the building that can indicate the intensity within the occupied space, workspace, or intensity entering the occupied space or workspace. Alternatively or additionally, the analysis can be accomplished through use of stored data that was received from sensors, estimated data, or data from other suitable sources.

In this example, the controller reduces the amount of human-made light to half (as shown in the lower chart, where the human-made light intensity 227 steps down from 1 to halfway between 1 and 0). At this point, the light in the spaces 220 in the upper chart is reduced to near the minimum intensity threshold 218. In some embodiments, the human-made light can be reduced in different increments, such as by a number of units of luminosity, a percentage of intensity, in a continuous manner between a minimum and a maximum, or other suitable increment types. The charts shown, provide an example having only two levels of light intensity, full lights and dimmed lights.

Light intensity 215 is the light from the windows with a current setting of sun blinds. Light intensity 217 is the light from the windows with fully shading blinds. As outdoor light increases along the x-axis, partial indoor light, that from windows with blinds, increases along the y-axis.

As the natural light intensity 213 continues to increase, the light in the space 220 again increases, as shown in the upper chart, toward the optimum desired light amount 216 and then toward the maximum acceptable light threshold 214. In this example, the controller again reduces the amount of human-made light, from half to zero (as shown in the lower chart, where the human-made light intensity 227 steps down from half to 0). At this point, the light in the spaces 220 in the upper chart is again reduced to near the minimum acceptable intensity threshold 218.

The natural light intensity 215 continues to increase and the light intensity in the space 220 again increases as shown in the upper chart, toward the optimum desired light amount 216. Once the light intensity 220 reaches the optimum desired light amount, the controller begins to actuate the blinds to reduce the amount of light entering the space. This shading of the natural light begins at line 221 and ends at line 222. The lines 221 and 222 span between the two charts to show the interaction between the changing of the blind position and the resultant change in the overall light intensity.

This is illustrated in the lower chart as the shades are actuated steadily over a period of time from fully open (0 on the chart) to fully closed (1 on the chart). As can be seen by the upper chart, the result of the changing of the blinds is a consistent amount of light 220 entering the space. Although shown as a steady closing of the blinds over time, in some embodiments, the blinds may close in a step-wise fashion making the light entering the space also change in a step-wise manner.

Once the blinds are fully closed (illustrated by a 1 in the lower chart) and natural light intensity 215 continues to increase, the light entering the space begins to increase from optimal toward the maximum desired light threshold 214. At this point, the human-made light sources are off and the blinds are fully closed.

The upper chart also includes a reference line 217 which illustrates the increase in natural light in the space if the human-made lights were not used and the blinds were fully closed from the beginning of the time period. In this example, the light intensity within the space would begin well below the minimum desired light threshold 218, but would eventually reach the same intensity as the human-made-blind adjustment method.

In the charts in Figure 2B and 2C, the charts in Figure 2B illustrate a warm weather example and the charts in Figure 2C illustrate a cold weather example. In the upper chart of Figure 2B, again, the light intensity within the space is represented by 220 and the natural light intensity is represented by 215 with full shading represented by 217.

In this example, the light intensity 220 begins at an initial amount 216 and increases toward the maximum desired light intensity threshold 214 as the natural light intensity 215 increases. As used in this example, initial intensity can be when there is no light coming in from the outside. The human-made lighting is again reduced which results in the light intensity within the space 220 decreasing to near the minimum desired light intensity threshold 218.

The light intensity 220 continues to increase as the natural light intensity 215 is continuing to increase. In this embodiment, at the left from 223, the heat gains from outside are low, therefore, the objective of control can be to keep light intensity in the space (line 220) as close as possible to an optimal level 216 so that the light comfort is maximal. This can be achieved, for example, by suitably manipulating sun blinds.

At the right from 223, the objective changes, here the control keeps heat gains from outside as low as possible, for example, by keeping sun blinds closed if it is possible (not to exceed maximum 214).. The dashed line above line 220 represents the light intensity if the blinds were left in fully open position and the dashed line below line 220 represents if the blinds were fully closed.

As with the example discussed above, as the light intensity continues to rise toward the maximum desired light intensity threshold 214, the human-made lighting is again adjusted at 224 to bring the light intensity in the space 220 to the minimum desired light intensity 218. In this embodiment, the light intensity 220 is maintained at the minimum threshold 218 until the blinds are fully closed at 225 at which point the light intensity 220 begins to increase again.

Such an adjustment process can be utilized for a number of circumstances. For example, in some instances, it may be desirable to reduce the amount of heat generated by the human generated lighting or the combination between the human generated lighting and the natural light entering the space. In such examples, it may be desirable to make use of more shading than was used in the previous example.

The chart on the bottom of Figure 2B shows the amount of human-made lighting 227 used, with 1 representing that the lights are at full intensity and 0 representing they are not emitting light. The chart also shows positioning of the blinds 226 with 1 representing full shading (blinds fully closed and allowing minimum natural light into the space) and zero representing no shading (blinds fully open and allowing maximum natural light into the space).

In the example of Figure 2C, the chart, again, includes the light intensity within the space that is represented by 220 and the natural light intensity represented by 215 with full shading represented by 217.

In this example, as with the examples above, the light intensity 220 begins at a particular value (e.g., an optimum value can be used, in some embodiments) amount 216 and increases toward the maximum desired light intensity threshold 214 as the natural light intensity 215 increases. Here, the slope of dashed lines (light from outside) is increased, when compared to Figure 2B because reflections from snow cover increases intensity of natural lights, in this example. The human-made lighting is again reduced which results in the light intensity within the space 220 decreasing to near the minimum desired light intensity threshold 218.

The light intensity 220 continues to increase as the natural light intensity 215 is continuing to increase. At this point, the light in the space 220 is reduced to near the minimum desired intensity threshold 218.

As the natural light intensity 215 continues to increase, the light in the space 220 again increases toward the optimum desired light amount 216 and then toward the maximum desired light threshold 214.

In this example, the controller again reduces the amount of human-made light. At this point, the light in the space 220 is again reduced to near the minimum desired intensity threshold 218.

As with the examples discussed above, as the light intensity continues to rise toward the maximum desired light threshold 214, the human-made lighting is again adjusted at 224 to bring the light intensity in the space 220 to the minimum desired light intensity 218. In this embodiment, the blinds are not closed until the light intensity 220 reaches the maximum threshold and then the blinds are closed to maintain the light intensity at the maximum threshold until the blinds are fully closed at 230 at which point the light intensity 220 begins to increase again.

Such an adjustment process can be utilized for a number of circumstances. For example, in some instances, it may be desirable to maximize the amount of heat generated by the combination between the human generated lighting and the natural light entering the space. In such examples, it may be desirable to make use of more natural light than used in the previous example.

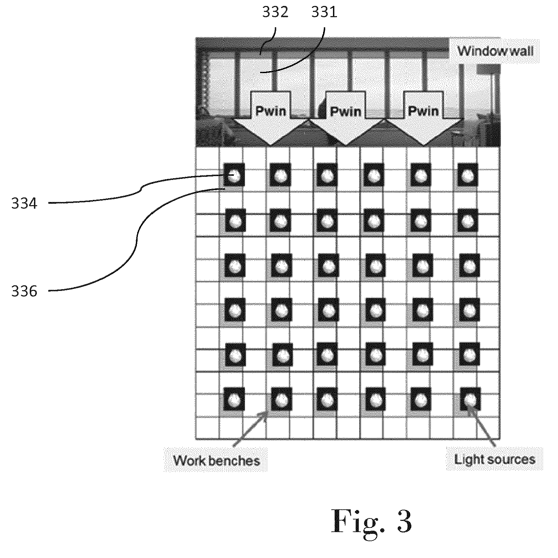

As with the chart at the bottom of Figure 2B, the chart at the bottom of Figure 2C shows the amount of human-made lighting 227 used, with 1 representing that the lights are at full intensity and 0 representing they are not emitting light. The chart also shows positioning of the blinds 226 with 1 representing full shading (blinds fully closed and allowing minimum natural light into the space) and zero representing no shading (blinds fully open and allowing maximum natural light into the space). Figure 3 illustrates an example of a workspace environment wherein one or more embodiments of the present disclosure may be implemented. In this environment, the overall workspace has a number of windows 331 allowing natural light to enter the overall workspace. The windows also have one or more blinds 332 that control the amount of light entering the workspace from the windows 331.

In the embodiment illustrated in Figure 3, each window 331 has a blind 332 to individually control light from a window. However, some embodiments may have one blind controlling light from one or more windows and some embodiments may have one window being controlled by one or more blinds.

The overall workspace illustrated in the embodiment of Figure 3, includes many individual occupied spaces 336. Each occupied space 336 can be occupied by one or more occupants at any given time and in some instances by no occupants.

Further, in the embodiment illustrated in Figure 3, each occupied space 336 is illuminated by one or more human-made light sources 334. In some embodiments, one human-made light source can be associated with one or more occupied spaces and in some embodiments, one occupied space can be associated with zero or more human-made light sources.

Some embodiments of the present disclosure can take into account the actual or estimated natural light that may enter a particular occupied space. As can be understood from the embodiment of Figure 3, the occupied spaces close to the windows 331 will have the potential to receive more light than those far from the windows 331.

One or more sensors can be used to collect data, or the data can be estimated, for example, from other workspaces and be used to estimate the amount of natural light intensity (e.g., through use of mathematical models or determined from collected history or a combination of both) that would be available at a particular occupied space and, in some embodiments at a particular time of date and/or date of the year. In such embodiments, the lighting can be best precisioned to the desired lighting of the occupant and/or the most energy efficient configuration for the occupied space.

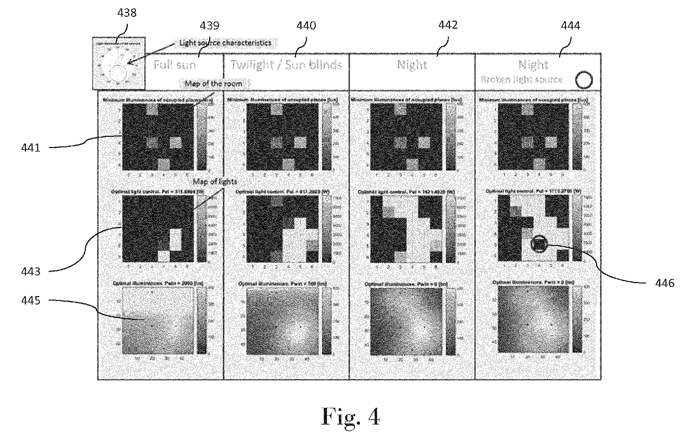

Figure 4 illustrates examples of different lighting conditions and the use of one or more embodiments of the present disclosure to change the lighting configuration in the space with one or more broken light sources. For example, in conditions of changing availability of light from human-made light sources (e.g., if some of them are broken), light intensity at places with required illumination can be sustained with the help of changed light controls after a light source outage.

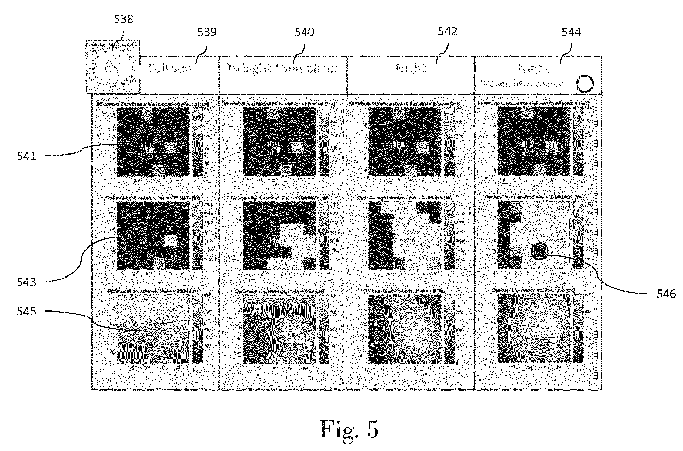

This may be beneficial, as several light sources can be configured in a smart way so that one or more light sources can serve several places and save energy. This can be seen in the examples in Figures 4 and 5, where artificial lights are activated based on an overall coverage scheme to achieve desired illumination of occupied places. A prior art controller would choose a simpler switching schema and simple light intensities, likely resulting in higher costs and potentially worse comfort.

Figure 4 illustrates lighting for a 6X6 workspace area (6 workspaces by 6 workspaces for a total of 36 workspaces as shown in the example of Figure 3). In this example, the top row shows desired illumination level of workspaces. Unoccupied spaces are dark and, in some embodiments, light intensity is not checked in those areas and so the light intensity could be any value in such embodiments.

The middle row shows optimal light intensities ("optimum", in this example, means minimal costs while providing desired or higher illumination at each occupied place) from human-made light sources. The intensities shown could be from one or more light sources illuminating this area. This is viewed as the total energy consumption in a particular area.

The bottom row shows achieved light intensities both from lights and windows for determined optimal controls at each occupied space of the workspace area. This can be determined based on an estimate of light in the workspace area or one or more particular occupied spaces or based on sensor data obtained from sensors within the workspace area or one or more particular occupied spaces and/or near one or more of the light sources.

The information in this figure can be displayed on a display of a computing device, such as the device described in more detail in Figure 6. For example, an administrator of the controller can review this information to determine if the proper lighting arrangement has been selected for one or more lighting conditions (e.g. full sun, twilight, etc.).

Box 438 includes some types of light source characteristics that may affect the choice of lighting used for the different occupied spaces. It should be noted that, generally, each controlled light source included in the solution for lighting for a particular occupied space may have different characteristics, which can be taken into account with the controller. The embodiment shown in Figure 4 is for a wide beam light source and so information about the type of beam is shown in box 438. Information regarding energy cost could also additionally or alternatively be provided in the box 438 or elsewhere in the displayed information.

In the left column, information about the lighting arrangement under full sun 439 is presented. On the top table 441 four occupied spaces or shown having a desired minimum threshold of light intensity illustrated as differently shaded squares with the grayscale of the square indicating the intensity of the light desired as a minimum threshold. In this example, it may be that only four spaces will be occupied and as such, the analysis of these spaces can be accomplished and the other spaces do not need to be analyzed as they will not be occupied.

A scale of light intensity is shown to the right of the table, with the lowest intensity being the darkest color and the highest intensity being the brightest color. The position of the square on the table can also be mapped to a particular location within the overall workspace (for example, the squares can correspond to the positions on the diagram of workspaces shown in Figure 3. It should be noted that the solution need not be constrained to rectangular mapping. A more accurate plan of the space with a more accurate configuration of light sources and illuminated places may be used. This picture in Figure 4 is rectangular for simplicity of the explanation herein, but should not be viewed as limiting.

For instance, the square at the top of the table 441 may be located in the top row, third space over from the left. This could correspond to a location at the top row, third space from the left in the workspace in Figure 3. This would put the space near the windows in the workspace of Figure 3.

The middle table 443 is an estimate of the lighting needed to achieve the desired 441 lighting for each occupied space within the 6X6 workspace. To make such an estimate, other data can be taken into account. For example, weather data, such as current weather sensed by sensors interior to or exterior to the building in which the workspace is located, weather data from a remote location, estimated weather data, forecast weather data, maximum and/or minimum light intensity of the natural light that can enter the workspace and/or a particular occupied space within the workspace, characteristics of the human-made lighting available (e.g., maximum and/or minimum light intensity, bulb type, cost, etc.) can be used in making the determination as to whether, where, and how much human-made lighting should be used.

In some embodiments, the human-made lights and blinds are controlled using actual or estimated current intensity. The weather forecast information, then may be used to minimize the frequency of changes. Knowing natural light prediction for the near future, the light from human-made lights may be set so that it will not have to be changed in near future and the desired illumination can still stay in allowed range. Thus unwanted fluctuation may be decreased.

In such embodiments, desired illumination can be maintained in a certain pre-specified range (e.g., determined by the occupant) and exceeding this range can be allowed for a certain pre-specified time interval (e.g., determined by the occupant). In this way, moves of sun blinds and control actions of human-made lights are kept under an acceptable frequency.

It should be noted that in some embodiments, it may be desirable to limit the frequency of the adjustment of the lights and/or blinds so that the occupant is not distracted or uncomfortable due to the frequency the lighting conditions changes. In such embodiments, the data used can be aggregated over time or sampled at certain periods and adjustments to the lighting conditions can be made periodically rather than dynamically in real time. Further, in some embodiments, the occupant can provide a preference for the frequency that the lighting conditions should be changed in their occupant space and such information can be used in adjusting the lighting conditions.

As can be seen from the middle table 443, the intensities of lights near the bottom of the table have been adjusted to allow the lighting to be optimal for certain occupied spaces from table 441.

The bottom table 445 in Figure 4 represents the optimal illuminances for each occupied space in the workspace. In the lighting arrangement of 439, these illuminances show that the intensity of light in each of the particular occupied spaces shown in 441 is satisfactory even though only two of those are illuminated by human-made light and in the areas at the top of the table, there is more light intensity that the minimum threshold. In the example shown in Figure 4, three places are illuminated by artificial lights. At 445, the upper left location in the triangle of spaces at the bottom has low requirements on light intensity. Therefore, it can be illuminated indirectly from neighboring switched on human-made light sources. The other two spaces get direct light from human-made light sources above them.

Further, in some embodiments, there may be neighboring spaces with drastically different lighting condition requirements (e.g., one occupant desires bright light and their neighbor requires low light). In such instances, a set of preferences for each occupant can be evaluated to determine if a compromised lighting condition arrangement can be created. To do so, in some embodiments, a preference table or hierarchy of preferences for lighting arrangements can be utilized. Based on such criteria, a set of lighting arrangements can be determined.

Any criteria for determining the preferences can be used in such embodiments. Examples of criteria that could be used include, type of work being accomplished in each workspace, importance of such work, special needs of the occupant, time of day, and/or energy consumption, etc.

In the lighting arrangement of column 440, rather than full sun, the exterior light is that of twilight or with sun blinds blocking a lot of the available light. In this arrangement, the four occupied spaces and their minimum intensities are the same as in the previous column. However, more human-made light from more light sources is being utilized as shown in the middle table. As shown in the bottom table, the intensity of the light at the top of the table is less, presumably because there is less natural light coming into that part of the workspace.

In the lighting arrangement of column 442, the exterior light is that of a night time condition. As with the last arrangement, in this arrangement, the four occupied spaces and their minimum intensities are the same. However, more human-made light from more light sources is being utilized as shown in the middle table. And, as shown in the bottom table, the intensity of the light is different for the different occupied spaces in order to best accommodate the occupants of the occupied spaces from the top table.

This methodology can also be used to change lighting intensities when a light source is broken. As can be seen in the right column 444, a broken light source 446 can be identified and the other light sources of the occupied space can be adjusted to compensate for the broken light source. The compensation can be accomplished with natural or human-made light sources. For example, the controller can take the broken light source into account and can compensate using other light sources as shown in the middle table. As can be seen in the bottom table, the overall lighting intensity can be made to be fairly similar to the lighting intensity created when the light source was operational (e.g., comparing the bottom tables of columns 442 and 444).

Figure 5 illustrates examples of different lighting conditions and the use of one or more embodiments of the present disclosure to change the lighting configuration. Figure 5 also illustrates lighting for a 6X6 workspace area. This figure illustrates different control of lights and different resulting illumination, when required light intensities on occupied spaces are the same, external light from windows with sun blinds is the same, but beam angles of some light sources are different.

As in Figure 4, the box 538 includes light source characteristics that may affect the choice of lighting used for the different occupied spaces. The embodiment shown in Figure 5 is for a narrow beam light source and so information about the type of beam is shown in box 538.

Figure 5 also includes columns for various lighting conditions including full sun 539, twilight/sun blinds 540, and night 542 and also shows an example 544 with a broken light source 546. In the example of Figure 5, the four occupied spaces and each occupant's desired light intensities are shown in the upper table 541.

As can be seen from the middle table 543, the intensities of lights near the bottom of the table have been adjusted to allow the lighting to be optimal for certain occupied spaces from table 541, but the pattern of lighting is different than in Figure 4 due to the different (narrow vs wide) beam characteristic of the human-made light sources.

This can be seen in the bottom table 545 in Figure 5 where the narrower light sources produce more discrete light intensity areas than in table 454 of the example of Figure 4. As discussed herein, the controller can include executable instructions that can use data about the workspace (such as occupant preferences, building occupancy periods, light source characteristics, weather, indoor temperature, air conditioning costs, other operational costs, and/or other information) to determine the location, intensity level, and/or number of human-made light sources and/or blinds to be used to provide a suitable amount of light intensity at a particular occupied space within the workspace.

As there are a variety of possible positions of sun blinds and control of lights depends on their position, there is another criterion which can be used in the determination of the final setting of the position and angle of the sun blinds and intensity of human-made light sources. This criterion is energy cost and the objective for this criterion is to minimize total energy cost for heating/cooling the occupied space and the electricity used for the lighting.

For example, it can be presumed that, in the summer, electricity costs for cooling are quite high and, thus, one goal can be to minimize solar gains from windows. During hot summer days, cooling the occupied space with open sun blinds is more expensive than the electricity used to power the human-made light sources with the blinds shading the windows. If the indoor temperature is low in the winter, it may be preferred to open the sun blinds and let solar heat enter into the occupied space as much as possible. As such, this information can be used to determine the configuration of the lighting conditions for an occupied space.

The embodiments of the present disclosure include using measurements of illumination, monitoring of light controls and sun blind control signals to build a model that may be used for localized illumination control adjusted for each occupied space within a larger workplace. In some embodiments, the system can include two components a controller and executable instructions that are adaptive and can learn as more data is collected about the lighting conditions in an occupied space.

The controller can, for example, be a multi-input-multi-output (MIMO) controller able to control individual lights and sun blinds and adapt controls for given parameters particular to a particular occupied space. The controller can be utilized, for example, to: set the sun blinds such that solar heat gains are in accordance with threshold heat gains (for example, based on season of the year), set sun blind position and monitor the level of light from the sun and sky through the windows based, for example, on sensor data, and maintain the desired light intensity at all occupied spaces within the large workspace that are under control of the controller.

In some embodiments, the controller can be configured to analyze a number of factors and determine a lighting arrangement based on that analysis. For example, the controller can control lights and sun blinds, while some conditions are satisfied and an objective function is minimized. The objective, in such an embodiment, is energy cost (e.g., energy consumption of lights). For instance, example conditions can be:
1. Sun blinds are set so that solar heat gains are in accordance with predetermined requirements (in summer and/or in winter);
2. Light from windows is determined by setting of sun blinds and monitored level of light from sun and skies through the windows or from other data sources; and/or
3. Desired light intensity at all specified places in the work space (potentially including multiple occupied spaces). Determinations of such an analysis can provide control instructions for all controlled lighting sources in the work space.

If it is possible to quantify costs for heating and cooling costs in relation with the position of sun blinds for current sky cover, then these costs may be included in the objective function analysis. In some embodiments, once the analysis has been completed for the human-made light sources, an analysis can also be made regarding the setting of sun blinds with regard to total energy costs and desired illumination of indoor work spaces.

Such an analysis, in its simplest form, may be solved by a linear programming algorithm, however, in some embodiments, a more complex formulation might need a non-linear programming structure.

As discussed herein, in some embodiments, the controller can also analyze one or more cost factors and use the cost analysis to assist in determining the setting of the human-made light sources and the sun blinds positions.

The controller can, for example, utilize a model with a matrix of influences {EL,PS} -> {IP}, which relates employed lights EL, position of each sun blind PS, and intensity of IP of illumination at each workplace. In such an embodiment, there can be several objectives. For example, some objectives of the controller can be applying the cheapest setting taking into account one or more of the various criterion discussed herein and satisfying multiple light level requirements given as a range of desired light intensities at occupied space (P).

The costs associated with the controller decision can, for example, be derived from power consumption of the lighting sources and potential solar heat gains determined by the sun blind position. The light level requirements can be derived, for example, from the presence of an occupant in occupied space P and their individual preferences, either immediate conveyed to the controller or stored in memory accessible by the controller.

Total energy consumption, for example, of lights, heating, ventilation, and cooling of the occupied space can be utilized by the controller as a variable objective function. Based on the above information, the controller chooses settings for the lights and sun blinds such that the objective function (cost determination) is minimized.

The model of lighting condition influences {EL, PS} -> {IP} is identified during unoccupied hours, for example, during weekends and nights. During identification, the controller can be used to change positions of sun blinds (PS) and vary light (S) intensities. The controller can then receive measurement of the impact of these changes in the occupied space (P).

Observed data can, in some embodiments, be used to adjust the fit of the statistical model {EL,PS} -> {IP}. The model can be dynamic (changing over time based on the data provided to the controller). For example, it can change with time of the day and/or time of the year, as sun position in the sky changes. In some embodiments, the time of the day can be included in the model as a variable. To capture longer term month to month or longer changes, the model can be periodically updated.

Figure 6 illustrates an example of a computing device for providing controller functionality in accordance with one or more embodiments of the present disclosure. Controller 647 can be, for example, controller 102 of the microclimate light level control system 100 previously described in connection with Figure 1.

For instance, in various embodiments, a localized controller proximate to one of the occupied spaces and/or a controller remote from the occupied spaces having the ability to execute computer readable instructions can perform some or all of the functions discussed herein. In some embodiments, multiple controllers can be used, such as one for controlling the blinds, one for controlling the human-made light sources, and one for determining the lighting arrangement for one or more occupied spaces within an overall workspace. In such embodiments, the multiple controllers can be communicatively linked to allow the controllers to communicate and coordinate actions. Such communication and coordination can be directed from a central controller that directs the actions of the other controllers.

For example, a computing device 647 (i.e., a device having computing functionality, as described herein, can also include a computer readable medium (CRM) in communication with processing resources) can be used by a user via a user interface 662 to accomplish a multitude of functions by executing computing device readable instructions. CRM can be in communication with a device having processor resources. The device can be in communication with a tangible non-transitory CRM storing a set of computer-readable instructions (CRI) 652 executable by one or more of the processor resources, as described herein.

Data 654 can also be stored in CRM and can be used by CRI to accomplish computing tasks. In the embodiment of Figure 6, CRI can be used to control one or more blinds via an actuator 658.

The device also includes a light source actuator 656 that can be used, for example, to control which light sources are turned on or off and/or the intensity of one or more light sources. In some embodiments, a controller can be used to control the on/off status of a group of light sources (e.g., which light sources in the group are to be turned on and off during a period of time) and/or to control the intensity of the light from one or more light sources in the group.

In some embodiments, each light source can have an independent controller associated with it that only controls the on/off status of a single light. Additionally, in some embodiments, each light can have an independent controller associated with it that only controls the light intensity of a single light source. In some such embodiments, a controller can determine which light sources are to be turned on or off and/or the intensity of particular light sources and this information can be conveyed to the controllers that control the individual light sources.

Sensor, operational cost, occupant preferences, and/or weather data can be stored in memory and used in the embodiments of the present disclosure. Additionally, data can include look-up tables, as mentioned above, and CRI can be used to access such tables and utilize the look-up tables for use in embodiments of the present disclosure.

In some embodiments, the controller can include executable instructions to respond to feedback (such as preferences) from the occupants, such as via a mobile device (mobile phone, tablet, etc.) or wearable device with location sensor (watch, wrist band, or other device that can be worn by the occupant).

The CRI can also be stored in a remote data resource 660 (e.g., computing device and/or memory device). The resource 660 can include memory storage, and the processor 650 can be coupled to the memory storage.

Processor resources 648 can execute CRI that can be stored on an internal or external non-transitory CRM. The processor resources can execute CRI to perform various functions.

A non-transitory CRM, as used herein, can include volatile and/or non-volatile memory. Volatile memory can include memory that depends upon power to store information, such as various types of dynamic random access memory (DRAM), among others.

Non-volatile memory can include memory that does not depend upon power to store information. Examples of non-volatile memory can include solid state media such as flash memory, electrically erasable programmable read-only memory (EEPROM), phase change random access memory (PCRAM), magnetic memory such as a hard disk, tape drives, floppy disk, and/or tape memory, optical discs, digital versatile discs (DVD), Blu-ray discs (BD), compact discs (CD), and/or a solid state drive (SSD), etc., as well as other types of computer-readable media.

The non-transitory CRM can also include distributed storage media. For example, the CRM can be distributed among various locations. The non-transitory CRM can be integral, or communicatively coupled, to a computing device, in a wired and/or a wireless manner. For example, the non-transitory CRM can be an internal memory, a portable memory, a portable disk, or a memory associated with another computing resource (e.g., enabling CRIs to be transferred and/or executed across a network such as the Internet).

The CRM can be in communication with the processor resources via a communication path. The communication path can be local or remote to a machine (e.g., a computer) associated with the processor resources.

Examples of a local communication path can include an electronic bus internal to a machine (e.g., a computer) where the CRM is one of volatile, non-volatile, fixed, and/or removable storage medium in communication with the processor resources via the electronic bus. The communication path can be such that the CRM is remote from the processor resources such as in a network relationship between the CRM and the processor resources.

That is, the communication path can be a network relationship. Examples of such a network relationship can include a local area network (LAN), wide area network (WAN), personal area network (PAN), and the Internet, among others. In such examples, the CRM can be associated with a first computing device and the processor resources can be associated with a second computing device.

As shown in Figure 6, controller 647 can include a memory 650 and a processor 648. Memory 650 can be any type of storage medium that can be accessed by processor 648 to perform various examples of the present disclosure. For example, memory 650 can be a non-transitory machine readable medium having computer readable instructions 652 (e.g., computer program instructions) stored thereon that are executable by processor 648 to achieve microclimate light level control as discussed in accordance with the present disclosure. That is, processor 648 can execute the executable instructions stored in memory 650 to achieve microclimate light level control as discussed in accordance with the present disclosure.

Further, although memory 650 is illustrated as being located in controller 647, embodiments of the present disclosure are not so limited. For example, memory 650 can also be located internal to another computing resource (e.g., enabling computer readable instructions to be downloaded over the Internet or another wired or wireless connection).

In the detailed description, reference is made to the accompanying drawings that form a part hereof. The drawings show by way of illustration how one or more embodiments of the disclosure may be practiced.

These embodiments are described in sufficient detail to enable those of ordinary skill in the art to practice one or more embodiments of this disclosure. It is to be understood that other embodiments may be utilized and that mechanical, electrical, and/or process changes may be made without departing from the scope of the present disclosure.

As will be appreciated, elements shown in the various embodiments herein can be added, exchanged, combined, and/or eliminated so as to provide a number of additional embodiments of the present disclosure. The proportion and the relative scale of the elements provided in the figures are intended to illustrate the embodiments of the present disclosure, and should not be taken in a limiting sense.

The figures herein follow a numbering convention in which the first digit or digits correspond to the drawing figure number and the remaining digits identify an element or component in the drawing. Similar elements or components between different figures may be identified by the use of similar digits. For example, 224 may reference element "24" in Figure 2, and a similar element may be references as 324 in Figure 3.

As used herein, "a" or "a number of" something can refer to one or more such things. For example, "a number of sensors" can refer to one or more sensors.

Although specific embodiments have been illustrated and described herein, those of ordinary skill in the art will appreciate that any arrangement calculated to achieve the same techniques can be substituted for the specific embodiments shown. This disclosure is intended to cover any and all adaptations or variations of various embodiments of the disclosure.

It is to be understood that the above description has been made in an illustrative fashion, and not a restrictive one. Combination of the above embodiments, and other embodiments not specifically described herein will be apparent to those of skill in the art upon reviewing the above description.

The scope of the various embodiments of the disclosure includes any other applications in which the above structures and methods are used. Therefore, the scope of various embodiments of the disclosure should be determined with reference to the appended claims, along with the full range of equivalents to which such claims are entitled.

In the foregoing Detailed Description, various features are grouped together in example embodiments illustrated in the figures for the purpose of streamlining the disclosure. This method of disclosure is not to be interpreted as reflecting an intention that the embodiments of the disclosure require more features than are expressly recited in each claim.

Rather, as the following claims reflect, inventive subject matter lies in less than all features of a single disclosed embodiment. Thus, the following claims are hereby incorporated into the Detailed Description, with each claim standing on its own as a separate embodiment.

## Claims

1. A microclimate light level controller for an occupied space comprising:
a controller that controls a total intensity of illumination in an occupied space, wherein the total intensity of illumination includes a calculation of intensity of illumination from one or more individual human-made light sources and natural light sources via sun-blinds and wherein the controller adapts one or more control settings based on a set of one or more predetermined criteria and wherein the controller includes a processor that executes instructions to analyze lighting data, including light sources being used, lighting intensity within the occupied space, and sun blind position, to determine an intensity of illumination in the occupied space.

2. The microclimate light level controller for an occupied space of claim 1, wherein the controller receives lighting data from a number of light sensors monitoring natural light entering the occupied space.

3. The microclimate light level controller for an occupied space of claim 1, wherein the controller receives lighting data from a number of light sensors monitoring illumination in the occupied space.

4. The microclimate light level controller for an occupied space of claim 1, wherein the controller receives lighting data from a number of blind sensors monitoring the position of blinds and slat angles of one or more of the blinds regulating the natural light entering the occupied space.

5. The microclimate light level controller for an occupied space of claim 1, wherein the controller includes memory and wherein lighting data stored in the memory includes a maximum and minimum intensity of illumination from the natural light sources in different defined places of the illuminated space.

6. The microclimate light level controller for an occupied space of claim 1, wherein the controller includes memory and wherein lighting data stored in the memory includes a maximum and minimum intensity of illumination from the human-made light sources.

7. The microclimate light level controller for an occupied space of claim 1, wherein the controller receives weather data that provides a forecast for an upcoming period.

8. The microclimate light level controller for an occupied space of claim 1, wherein the controller includes memory and wherein lighting data stored in the memory includes a maximum and minimum preferred intensity of illumination selected by a user.

9. The microclimate light level controller for an occupied space of claim 1, wherein the controller includes memory and wherein lighting data stored in the memory includes a maximum and minimum preferred intensity of illumination of human-made light sources selected by a user.

10. The microclimate light level controller for an occupied space of claim 1, wherein the controller includes memory and wherein lighting data stored in the memory includes a maximum and minimum preferred intensity of illumination of natural light sources selected by a user.

## Amended claims

### Amended claims in accordance with Rule 137(2) EPC.

1. A microclimate light level controller (102, 647) for an occupied space comprising:
a controller (102, 647) configured to control a total intensity (220) of illumination in an occupied space (114, 220, 336), wherein the total intensity (220) of illumination includes a combination of intensity of illumination from one or more individual human-made light sources (112, 334) and natural light sources via sun-blinds (110, 226, 332) and wherein the controller (102, 647) is configured to adapt one or more control settings based on a set of one or more predetermined criteria and wherein the controller (102, 647) includes a processor configured to execute instructions to analyze data, including the light sources, lighting intensity (220) within the occupied space (114, 220, 336), heat generated by the one or more natural light sources, and sun blind (110, 226, 332) position, to control the total an intensity (220) of illumination in the occupied space (114, 220, 336).

2. The microclimate light level controller (102, 647) for an occupied space (114, 220, 336) of claim 1, wherein the controller (102, 647) receives lighting data from a number of light sensors (109) monitoring natural light entering the occupied space (114, 220, 336).

3. The microclimate light level controller (102, 647) for an occupied space (114, 220, 336) of claim 1, wherein the controller (102, 647) receives lighting data from a number of light sensors (109) monitoring illumination in the occupied space (114, 220, 336).

4. The microclimate light level controller (102, 647) for an occupied space (114, 220, 336) of claim 1, wherein the controller (102, 647) receives lighting data from a number of blind sensors monitoring the position of blinds (110, 226, 332) and slat angles of one or more of the blinds (110, 226, 332) regulating the natural light entering the occupied space (114, 220, 336).

5. The microclimate light level controller (102, 647) for an occupied space (114, 220, 336) of claim 1, wherein the controller (102, 647) includes memory (660, 650) and wherein lighting data stored in the memory (660, 650) includes a maximum and minimum intensity (213, 215, 217) of illumination from the natural light sources in different defined places of the illuminated space (114, 220, 336).

6. The microclimate light level controller (102, 647) for an occupied space (114, 220, 336) of claim 1, wherein the controller (102, 647) includes memory (660, 650) and wherein lighting data stored in the memory (660, 650) includes a maximum and minimum intensity (227) of illumination from the human-made light sources (112, 334).

7. The microclimate light level controller (102, 647) for an occupied space (114, 220, 336) of claim 1, wherein the controller (102, 647) receives weather data that provides a forecast for an upcoming period.

8. The microclimate light level controller (102, 647) for an occupied space (114, 220, 336) of claim 1, wherein the controller (102, 647) includes memory (660, 650) and wherein lighting data stored in the memory (660, 650) includes a maximum (214) and minimum (218) preferred intensity of illumination selected by a user.

9. The microclimate light level controller (102, 647) for an occupied space (114, 220, 336) of claim 1, wherein the controller (102, 647) includes memory (660, 650) and wherein lighting data stored in the memory (660, 650) includes a maximum and minimum preferred intensity of illumination of human-made light sources (112, 334) selected by a user.

10. The microclimate light level controller (102, 647) for an occupied space (114, 220, 336) of claim 1, wherein the controller (102, 647) includes memory (660, 650) and wherein lighting data stored in the memory (660, 650) includes a maximum and minimum preferred intensity of illumination of natural light sources selected by a user.
